# EUROPEAN PATENT APPLICATION

(11) **EP 2 028 711 A1**
(43) Date of publication of application: **25.02.2009**
(21) Application number: 08252764.9
(22) Date of filing: 20.08.2008
(51) Int. Cl.: H01M 8/10, H01M 4/88

(54) **Method of producing electrolyte membrane-electrode assembly and method of producing electrolyte membrane**

(30) Priority: 23.08.2007 JP 2007216889
(71) Applicant: Toyota Jidosha Kabushiki Kaisha, Toyota-shi, Aichi-ken 471-8571 (JP)
(72) Inventor: Akita, Yasuhiro, Aichi-ken, 471-8571 (JP)
(74) Representative: Jackson, Martin Peter

(57) **Abstract**

A method of producing an electrolyte membrane-electrode assembly that constitutes a fuel cell includes a step of preparing a polymer electrolyte membrane formed of a solid polymer electrolyte, a step of forming a pair of electrodes each including a catalyst, on the polymer electrolyte, a step of preparing a cerium-containing film or films containing a cerium compound, and a step of superimposing the cerium-containing film(s) on the polymer electrolyte membrane on which the electrodes are formed, such that the cerium containing film and the corresponding electrode are in contact with each other.

## Description

### BACKGROUND OF THE INVENTION

### 1. Field of the Invention

This invention relates to a method of producing an electrolyte membrane-electrode assembly, and a method of producing an electrolyte, membrane for a fuel cell.

### 2. Description of the Related Art

Generally, polymer electrolyte fuel cells include electrolyte layers in the form of solid polymer electrolyte membranes that exhibit proton conductivity due to the presence of sulfonic acid groups. In this type of fuel cell, peroxide radicals arising from electrochemical reactions may cause chemicals degradation of the electrolyte membrane, which may result in reduction of the durability of the fuel cell. To suppress the degradation of the electrolyte membrane as described above, it has been proposed to mix or introduce a low-solubility cerium compound that is hard to dissolve, into the electrolyte membrane. As one method of introducing the low-solubility cerium compound into the electrolyte membrane, the electrolyte membrane is immersed in a solution containing cerium ions, so that part of the sulfonic acid groups included in the electrolyte membrane undergoes ion exchange with cerium ions. Then, the electrolyte membrane that has gone through ion exchange is immersed in a solution containing a substance that reacts with cerium to produce a low-solubility cerium compound, so that the low-solubility cerium compound is formed in the electrolyte membrane, as disclosed in, for example, Japanese Patent Application Publication No. 2006-107914 (JP-A-2006-107914).

However, when the electrolyte membrane is immersed in the solution containing cerium ions, the electrolyte membrane swells. When the electrolyte membrane is dried after being immersed in the solution, the electrolyte membrane contracts. As a result, wrinkles or swelling may occur in the electrolyte membrane, and the electrolyte membrane may be formed with protrusions and recesses, or uneven surfaces.

### SUMMARY OF THE INVENTION

This invention suppresses or avoids undesirable deformation of the electrolyte membrane, and improves the durability of the electrolyte membrane.

A method of producing an electrolyte membrane-electrode assembly according to a first aspect of the invention includes a first step of preparing a polymer electrolyte membrane comprising a solid polymer electrolyte, a second step of forming an electrode including a catalyst, on the polymer electrolyte membrane, a third step of preparing a cerium-containing film containing a cerium compound, and a fourth step of superimposing the cerium-containing film on the polymer electrolyte membrane on which the electrode is formed, such that the electrode and the cerium-containing film are in contact with each other.

According to the method of producing the electrolyte membrane-electrode assembly of the first aspect of the invention, the cerium-containing film is superposed on the polymer electrolyte membrane on which the electrode is formed such that the electrode and the cerium-containing film are in contact with each other, whereby cerium ions are allowed to diffuse from the cerium-containing film into the polymer electrolyte membrane. Thus, the electrolyte membrane-electrode assembly having the polymer electrolyte membrane in which cerium ions are dispersed is produced without using a solution, or the like, for dispersing cerium ions in the polymer electrolyte membrane, which would cause deformation of the polymer electrolyte membrane. If the thus produced electrolyte membrane-electrode assembly in which no deformation occurs in the polymer electrolyte membrane is used for production of a fuel cell, deterioration of the cell performance and reduction of the durability of the fuel cell, which would be caused by deformation of the polymer electrolyte membrane, are suppressed or avoided. By dispersing cerium ions in the polymer electrolyte membrane as described above, it is also possible to suppress chemical degradation of the electrolyte membrane-electrode assembly due to peroxide radicals.

A method of producing an electrolyte membrane-electrode assembly according to a second aspect of the invention includes a first step of preparing a polymer electrolyte membrane comprising a solid polymer electrolyte, a second step of preparing a cerium-containing film containing a cerium compound, a third step of forming an electrode including a catalyst, on the cerium-containing film, and a fourth step of superimposing the cerium-containing film on which the electrode is formed, on the polymer electrolyte membrane, such that the electrode and the polymer electrolyte membrane are in contact with each other.

According to the method of producing the electrolyte membrane-electrode assembly of the second aspect of the invention, the cerium-containing film on which the electrode is formed is superposed on the polymer electrolyte membrane such that the electrode and the polymer electrolyte membrane are in contact with each other, whereby cerium ions are allowed to diffuse from the cerium-containing film into the polymer electrolyte membrane. Thus, the electrolyte membrane-electrode assembly having the polymer electrolyte membrane in which cerium ions are dispersed is produced without using a solution, or the like, for dispersing cerium ions in the polymer electrolyte membrane, which would cause deformation of the polymer electrolyte membrane. If the thus produced electrolyte membrane-electrode assembly in which no deformation occurs in the polymer electrolyte membrane is used for production of a fuel cell, deterioration of the cell performance and reduction of the durability of the fuel cell, which would be caused by deformation of the polymer electrolyte membrane, are suppressed or avoided. By dispersing cerium ions in the polymer electrolyte membrane as described above, it is also possible to suppress chemical degradation of the electrolyte membrane-electrode assembly due to peroxide radicals.

A method of producing an electrolyte membrane according to a third aspect of the invention includes a first step of preparing a polymer electrolyte membrane comprising a solid polymer electrolyte, a second step of preparing a cerium-containing film containing a cerium compound, and a third step of bringing the polymer electrolyte membrane and the cerium-containing film into contact with each other.

According to the method of producing the electrolyte membrane of the third aspect of the invention, the polymer electrolyte membrane and the cerium-containing film are brought into contact with each other, so that cerium ions are allowed to diffuse from the cerium-containing film into the polymer electrolyte membrane, to provide the polymer electrolyte membrane in which the cerium ions are dispersed. Since no solution, or the like, is used for dispersing cerium ions in the polymer electrolyte membrane, no deformation occurs in the polymer electrolyte membrane. If the thus produced polymer electrolyte membrane is used for production of a fuel cell, deterioration of the cell performance and reduction of the durability of the fuel cell, which would be caused by deformation of the polymer electrolyte membrane, are suppressed or avoided. By dispersing cerium ions in the polymer electrolyte membrane as described above, it is also possible to suppress chemical degradation of the electrolyte membrane-electrode assembly due to peroxide radicals.

In the method of producing the electrolyte membrane-electrode assembly or the method of producing the electrolyte membrane, the cerium-containing film may include a film comprising a solid polymer electrolyte, and the cerium compound dispersed in the film. With this arrangement, cerium in the cerium compound is ionized in and dissolved into water contained in the solid polymer electrolyte that constitutes the cerium-containing film, which water is ultra-strong-acid water containing at least combined water, and cerium ions are then diffused into the polymer electrolyte membrane. It is thus possible to improve the efficiency with which cerium ions are diffused into the polymer electrolyte membrane.

The cerium compound contained in the cerium-containing film may include at least cerium oxide (CeO₂). In this case, cerium ions are diffused from the cerium-containing film into the polymer electrolyte membrane with improved efficiency.

In the method of producing the electrolyte membrane-electrode assembly according to the first or second aspect of the invention, the electrode may contain a polymer electrolyte in addition to the catalyst. In this case, cerium ions are also allowed to diffuse from the cerium-containing film into the polymer electrolyte included in the electrode. Thus, even where the electrode contains the polymer electrolyte, chemical degradation of the polymer electrolyte in the electrode, due to peroxide radicals, can be suppressed.

In the method of producing the electrolyte membrane-electrode assembly according to the first aspect of the invention, the above-indicated fourth step may be a step of sandwiching the polymer electrolyte membrane on which the electrodes are formed, between the cerium-containing films.

In the method of producing the electrolyte membrane-electrode assembly according to the second aspect of the invention, the above-indicated fourth step may be a step of sandwiching the polymer electrolyte membrane on which the electrodes are formed, between the cerium-containing films.

In the method of producing the electrolyte membrane according to the third aspect of the invention, the above-indicated third step may be a step of sandwiching the polymer electrolyte membrane between the cerium-containing films.

With the arrangements as described above, cerium ions are diffused from the opposite sides of the polymer electrolyte membrane into the polymer electrolyte membrane with improved efficiency.

The present invention may be implemented in various forms other than the above-described forms. For example, the invention may be implemented in the form of, for example, an electrolyte membrane-electrode assembly produced by the method of producing an electrolyte membrane-electrode assembly according to the invention, or an electrolyte membrane for a fuel cell produced by the method of producing an electrolyte membrane for a fuel cell according to the invention.

### BRIEF DESCRIPTION OF THE DRAWINGS

The foregoing and further objects, features and advantages of the invention will become apparent from the following description of embodiments with reference to the accompanying drawings, wherein like numerals are used to represent like elements, and wherein:
FIG. 1 is a cross-sectional view schematically illustrating the construction of a unit cell 10;
FIG. 2 is a flowchart illustrating a method of producing a MEA 30;
FIGS. 3A, 3B, 3C and 3D are explanatory views schematically showing a part of the process illustrated in FIG. 2; and
FIG. 4A and FIG. 4B are explanatory views each showing a section of the MEA when observed with EPMA.

### DETAILED DESCRIPTION OF THE EMBODIMENTS

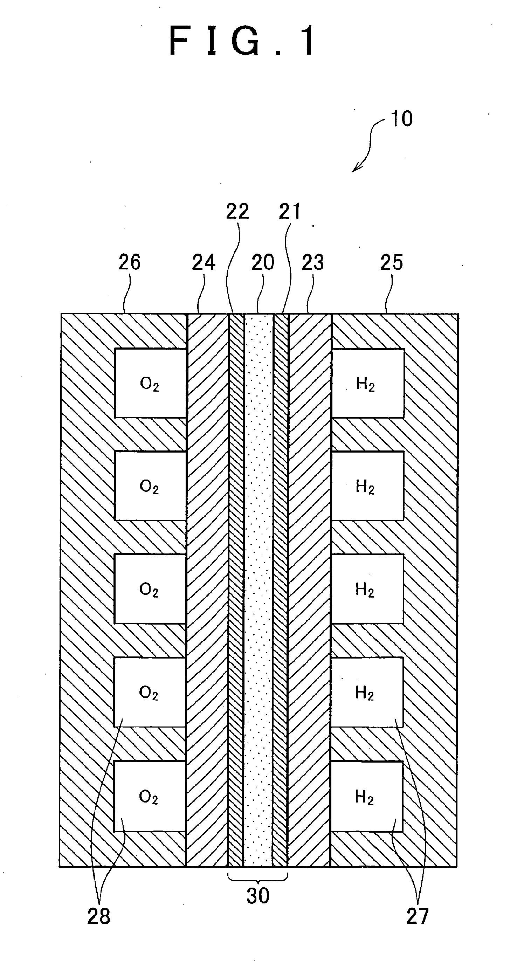

Construction of Fuel Cell: FIG. 1 is a cross-sectional view schematically illustrating the construction of a unit cell 10 that constitutes a fuel cell as one embodiment of the invention. The unit cell 10 includes an electrolyte membrane 20, anode 21 and cathode 22 as electrodes formed on the opposite surfaces of the electrolyte membrane 20, gas diffusion layers 23, 24 between which the electrolyte membrane 20 on which the electrodes are formed is sandwiched, and gas separators 25, 26 disposed outside the gas diffusion layers 23, 24.

The fuel cell of this embodiment is a polymer electrolyte fuel cell, and the electrolyte membrane 20 is composed of a solid polymer electrolyte that exhibits proton conductivity under wet conditions. The anode 21 and cathode 22 include, for example, platinum or a platinum alloy, which serves as a catalyst. More specifically, each of the anode 21 and cathode 22 includes carbon particles loaded with the above-mentioned catalyst, and an electrolyte similar to the polymer electrolyte of the electrolyte membrane 20. The anode 21, cathode 22 and the electrolyte membrane 20 constitute a MEA (membrane electrode assembly) 30. In the MEA 30 of this embodiment, the electrolyte provided in the electrolyte membrane 20 and electrodes 21, 22 contains cerium. The detailed construction of the MEA 30 and the process of producing the MEA 30 will be described in detail later.

The gas diffusion layers 23, 24 are formed from an electrically conductive component or material having gas permeability, for example, may be formed from carbon paper or carbon cloth, or metal mesh or metal foam. The gas diffusion layers 23, 24 of this embodiment are formed as flat, plate-like components. The gas diffusion layers 23, 24 provide gas channels through which gas is supplied to the electrodes for use in electrochemical reactions, and also collect current from the electrodes.

The gas separators 25, 26 are gas-impermeable, electrically conductive components formed of, for example, compressed carbon or stainless steel. Each of the gas separators 25, 26 has a number of recesses. With the recesses thus formed, an intra-cell fuel gas channel 27 through which fuel gas containing hydrogen flows is formed between the gas separator 25 and the gas diffusion layer 23. Also, an intra-cell oxidizing gas channel 28 through which oxidizing gas containing oxygen flows is formed between the gas separator 26 and the gas diffusion layer 24.

In a peripheral portion of the unit cell 10, seal members (not shown), such as gaskets, are provided for ensuring gastight sealing of the intra-cell fuel gas channel 27 and the intra-cell oxidizing gas channel 28. While the fuel cell of this embodiment has a stacked structure in which a plurality of unit cells 10 are stacked together, a plurality of gas manifolds (not shown) through which fuel gas or oxidizing gas flows are formed in parallel with the direction in which the unit cells 10 are staked. In operation, the fuel gas that flows through a fuel gas supply manifold, as one of the above-mentioned gas manifolds, is distributed to each unit cell 10, passes through the corresponding intra-cell fuel gas channel 27 for use in an electrochemical reaction, and is then collected into a fuel gas discharge manifold as one of the gas manifolds. Similarly, the oxidizing gas that flows through an oxidizing gas supply manifold is distributed to each unit cell 10, passes through the corresponding intra-cell oxidizing gas channel 28 for use in an electrochemical reaction, and is then collected into an oxidizing gas discharge channel.

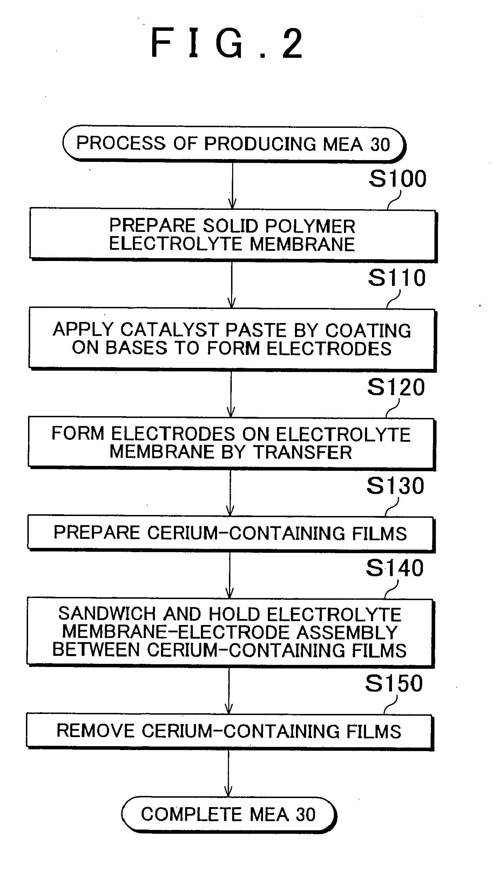

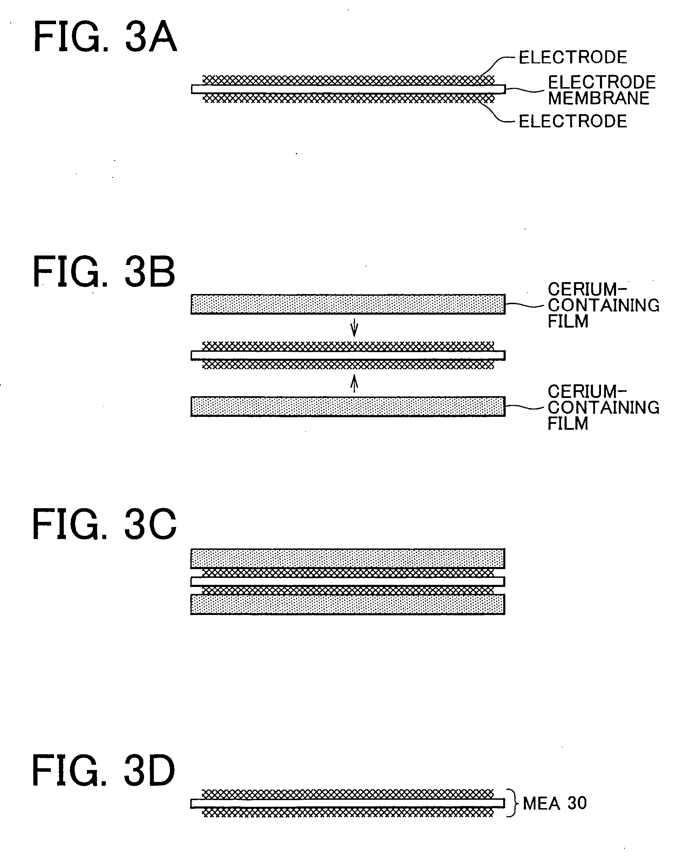

Process of Producing the MEA 30: FIG. 2 is a flowchart illustrating a method of producing the MEA 30. FIG. 3A through FIG. 3D are explanatory views schematically showing a part of the process of FIG 2. In the fabrication of the MEA 30 according to this embodiment, after the electrodes are formed on the solid polymer electrolyte membrane, cerium ions are diffused into the electrolyte membrane and the electrolyte contained in the electrodes.

To produce the MEA 30, a solid polymer electrolyte membrane that provides the electrolyte membrane 20 is initially prepared (step S100). In this embodiment, an electrolyte membrane formed of a perfluorosulfonic acid electrolyte is used.

A catalyst paste for forming the electrodes is also prepared, aside from the electrolyte membrane, and the catalyst paste is applied by coating onto a suitable base (e.g., a base formed of polyethylene terephthalate (PET) or polytetrafluoroethylene (PTFE), to form an electrode on the base (step S110). The catalyst paste contains carbon particles loaded with platinum, and a fluorine-containing solid polymer electrolyte similar to that of the electrolyte membrane 20. The platinum-loaded carbon particles are produced by impregnation or coprecipitation, or an ion exchange method, such that carbon particles formed of, for example, carbon black are dispersed in a solution of a platinum compound (e.g., a tetra-amine platinum salt solution, or a dinitrodiamine platinum solution, or a platinum nitrate solution, or a platinum acid chloride solution). The platinum-loaded carbon particles produced in this manner are dispersed in suitable water and an organic solvent, and is further mixed with an electrolyte solution (e.g., Nafion solution manufactured by Aldrich Chemical), to provide the catalyst paste. The catalyst paste may be applied to the base by, for example, spraying, screen printing, a doctor blade method, or an ink jet method. By using these methods, a coating of the catalyst paste having a desired thickness can be formed on the base. After the application of the catalyst paste to the base as described above, the coating of the catalyst paste is dried, to form a porous electrode having fine pores therein.

Subsequently, the electrodes formed on the bases are transferred under heat and pressure (by hot press) onto the electrolyte membrane prepared in step S100, and then the bases are peeled off and removed, thereby to provide an electrolyte membrane-electrode assembly in which the electrodes are formed on the electrolyte membrane (step S120). The thus obtained electrolyte membrane-electrode assembly is illustrated in FIG. 3A.

Also, cerium-containing films are prepared (step S130), aside from the electrolyte membrane-electrode assembly as described above. In this embodiment, a film that contains a cerium compound and is formed of an electrolyte similar to the fluorine-containing solid polymer electrolyte of the electrolyte membrane 20 and electrodes is used as the cerium-containing film. As an example of the method of producing the cerium-containing film, the cerium compound is dissolved or dispersed in a certain concentration in the above-mentioned electrolyte solution containing the electrolyte, to provide a cerium-containing electrolyte solution, and the cerium-containing electrolyte solution is applied by coating onto a substrate, such s a glass plate, and then dried. The concentration of the cerium compound in the cerium-containing film may be, for example, 5 - 20%.

The cerium compound contained in the cerium-containing film may be selected from water soluble cerium compounds, such as cerium nitrate, cerium acetate, cerium chloride, and cerium sulfate, low-solubility cerium compounds, such as cerium oxide, cerium monophosphate, cerium diphosphate, and cerium carbonate, and composite materials of cerium and tungsten, cerium and zirconium, and cerium and lanthanum.

Next, the electrolyte membrane-electrode assembly obtained in step S120 is sandwiched between the cerium-containing films prepared in step S130, and is held in this condition (step S140). With the electrolyte membrane-electrode assembly thus sandwiched between the cerium-containing films and held in this condition, cerium contained in the cerium-containing films diffuses into the solid polymer electrolyte provided in the electrolyte membrane-electrode assembly. FIG. 3B shows the electrolyte membrane -electrode assembly when it is sandwiched between the cerium-containing films, and FIG. 3C shows the electrolyte membrane-electrode assembly kept being sandwiched between the cerium-containing films.

When the electrolyte membrane-electrode assembly is sandwiched between the cerium-containing films as described above, the cerium compound contained in the cerium-containing film is gradually dissolved into water contained in the solid polymer electrolyte that constitutes the cerium-containing film, within the cerium-containing film, so that cerium is ionized. The water contained in the electrolyte that constitutes the cerium-containing film represents combined water (i.e., water combined with or bound to electrolyte molecules as a constituent component of the electrolyte), and water absorbed from the environment into the film in the case where water is supplied from the environment to the electrolyte that constitutes the cerium-containing film. In the meantime, the polymer electrolyte provided in the electrolyte membrane 20 and electrodes 21, 22 that constitute the MEA 30 also contains water. The water contained in the electrolyte is assumed to be ultra-strong-acid water due to the presence of sulfonic acid groups in the electrolyte, and cerium is easily ionized and dissolved in the water. The cerium ions dissolved in the water contained in the electrolyte of the cerium-containing film move into water contained in the electrolyte provided in the MEA 30, and diffuse into the MEA 30 due to a concentration gradient. The cerium ions thus diffused in the MEA 30 perform ion exchange with part of the sulfonic acid groups of the solid polymer electrolyte provided in the electrolyte membrane 20 and electrodes 21, 22 that constitute the MEA 30, and remain in the solid polymer electrolyte. Upon ionization of cerium as described above, cerium is decomposed into trivalent or tetravalent ions, depending on the type of the cerium compound used and the ambient environment.

As described above, the movement of cerium ions is assumed to be caused by dissolution of the cerium ions in water contained in the solid polymer electrolyte, and the efficiency of the movement of the cerium ions becomes higher if the amount of water contained in the solid polymer electrolyte exceeds that of the combined water (i.e., water combined with electrolyte molecules). Accordingly, when the electrolyte membrane-electrode assembly is sandwiched between the cerium-containing films, the partial pressure of water vapor in the environment may be increased so that the amount of water contained in the electrolytes of the cerium-containing films and the electrolyte membrane-electrode assembly exceeds that of the combined water. Where the partial pressure of water vapor in the environment is increased, the partial pressure of water vapor in the environment may be controlled so that deformation of the electrolyte membrane due to absorption of water vapor in the environment is held in a permissible range. To this end, the humidity of the atmosphere in the environment in which the electrolyte membrane-electrode assembly is sandwiched between the cerium-containing films is controlled to, for example, 40 - 60%RH. While the cerium compound mixed into the cerium-containing films may be selected from the various compounds as indicated above, the water soluble cerium compounds are preferably used for an improvement of the efficiency with which cerium is ionized and diffuses into water contained in the electrolyte.

In step S140, the temperature at which the electrolyte membrane-electrode assembly is sandwiched and held between the cerium-containing films and the length of time for which the assembly is held between the cerium-containing films are set to suitably specified values, so that the amount of cerium ions that diffuse into the electrolyte provided in the electrodes and electrolyte membrane can be controlled to a desired amount. Thus, the amount of cerium ions diffused depends on the temperature and the time; therefore, if the cerium-containing films in which the cerium compound is sufficiently uniformly dispersed are used while the electrodes including the electrolyte in a sufficiently uniform condition are used, cerium ions are sufficiently uniformly diffused into the MEA 30. After a lapse of the specified time, the cerium-containing films are peeled off and removed (step S150), so as to provide the MEA 30 in which the cerium ions are diffused. The MEA 30 obtained after the removal of the cerium-containing films is illustrated in FIG. 3D.

According to the method of producing the fuel cell of this embodiment constructed as described above, the cerium-containing films are used for dispersing cerium into the solid polymer electrolyte of the MEA 30; therefore, the electrolyte membrane 20 does not undergo deformation due to introduction of cerium into the MEA 30, and deterioration of the cell performance and reduction of the durability of the fuel cell, which would otherwise be caused by deformation of the electrolyte membrane 20, can be suppressed or prevented. Also, the dispersion of cerium in the MEA 30 makes it possible to suppress or avoid degradation of the MEA 30 due to peroxide radicals.

The degradation of the MEA 30 may be suppressed or avoided through dispersion of cerium into the electrolyte, in the following manner. When cerium is dispersed or diffused into the electrolyte of the MEA 30, cerium ions, which are trivalent or tetravalent ions, perform ion exchange with part of the sulfonic acid groups of the solid polymer electrolyte. If peroxide radicals or hydrogen peroxide that produces peroxide radials arise from power generation of the fuel cell, the cerium ions in the electrolyte inactivate the peroxide radicals, and the like. As examples of such reactions, the expression (1) below represents a reaction between trivalent cerium ions and hydrogen peroxide, and the expression (2) below represents a reaction between trivalent cerium ions and peroxide radials.

2Ce³⁺ + H₂O₂ + 2H⁺ → 2Ce⁴⁺ + 2H₂O (1)

Ce³⁺+ ·OH → Ce⁴⁺ + OH⁻ (2)

In the above manners, the cerium ions inactivate peroxide radicals or inhibit production of peroxide radicals, thereby to suppress or avoid degradation of the electrolyte due to peroxide radicals.

In this embodiment, the cerium-containing films are brought into and held in contact with the MEA 30 so that cerium is dispersed into the electrolyte of the MEA 30. Accordingly, the dispersion of cerium into the electrolyte is accomplished without causing swelling of the electrolyte membrane due to a solvent, or the like, or without causing deformation of the electrolyte membrane, for example, formation of uneven surfaces, as a result of the swelling. If the electrolyte membrane is formed with uneven surfaces, the adhesion between the electrolyte membrane and the electrodes may be reduced, and the contact resistance between the electrolyte membrane and the electrodes may be increased. Also, if the electrolyte membrane is formed with uneven surfaces, the adhesive strength between the electrolyte membrane and the electrodes may be reduced, and the durability of the fuel cell may be reduced. In this embodiment, since the introduction of cerium is accomplished without making the electrolyte membrane uneven, the fuel cell is free from or less likely to suffer from problems, such as the increase in the contact resistance and the reduction of the durability.

As a method of introducing cerium into the electrolyte membrane, it may be proposed to form the electrolyte membrane while mixing cerium into the material of the electrolyte membrane in advance. In this case, however, cerium in the form of fine particles of some size is mixed into the material, and it is difficult to uniformly disperse the cerium particles in the electrolyte membrane. In this embodiment, on the other hand, cerium in the form of ions is diffused according to a concentration gradient, such that cerium ions are uniformly dispersed in the electrolyte. Thus, according to this embodiment in which cerium ions are uniformly diffused in the electrolyte through contact with the cerium-containing films, the MEA 30 having resistance to peroxide radicals with uniformity through the entire volume thereof can be produced. Furthermore, in this embodiment, there is no need to form an electrolyte membrane especially containing cerium, using a material in which cerium is added to the electrolyte as described above. Rather, an electrolyte membrane as a commercially available product may be used in this embodiment.

In this embodiment, after the electrolyte membrane and the electrodes are joined together, cerium ions are diffused into the electrolyte. Therefore, as compared with the case where the electrodes are joined to the electrolyte membrane in which cerium ions are diffused in advance, the joining temperature at which the electrodes are joined to the electrolyte membrane is advantageously reduced. As described above, when cerium is introduced into the electrolyte membrane, the cerium is dissolved into water (such as combined water), which is ultra-strong-acid water, in the electrolyte, and ionized, and the cerium ions perform ion exchange with part of the sulfonic acid groups of the electrolyte. Since the number of hydrophilic groups in the electrolyte membrane is reduced through the ion exchange, the electrolyte membrane is made hydrophobic and its young's modulus increases, and its adherability is reduced, thus making it necessary to join the electrodes to the electrolyte membrane at a higher temperature. According to the method of this embodiment, the electrolyte membrane is not made hydrophobic when the electrodes are joined to the electrolyte membrane; therefore, the joining temperature need not be raised in order to ensure sufficient adhesion, and the electrolyte membrane is less likely or unlikely to degrade due to heat applied upon joining, thus assuring sufficient durability of the fuel cell. Also, in this embodiment, the MEA 30 is sandwiched between the cerium-containing films, and cerium ions are diffused into both the electrolyte membrane 20 and the electrodes, degradation of the electrolytes provided in both the electrolyte membrane 20 and the electrodes can be suppressed. It is, however, to be noted that cerium ions may be diffused in advance into the electrolyte membrane prior to joining of the electrodes to the electrolyte membrane 20, and then the electrodes may be joined to the electrolyte membrane 20. In this case, too, degradation of the electrolyte membrane due to peroxide radicals is advantageously suppressed.

While the electrolyte membrane joined with the electrodes is sandwiched between the cerium-containing films in this embodiment so that cerium ions are diffused into the electrolyte, the cerium-containing film may be placed on only one side (i.e., one of the opposite surfaces) of the electrolyte membrane for diffusion of cerium ions. Even in the case where the cerium-containing film is placed on only one side of the electrolyte membrane, cerium that has been ionized diffuses into the electrolyte according to a concentration gradient, and therefore, cerium can be uniformly dispersed in the electrolyte.

While the cerium-containing film used in this embodiment is formed of an electrolyte similar to the fluorine-containing solid polymer electrolyte of the electrolyte membrane 20 and electrodes, and contains a cerium compound, different types of films may be used as the cerium-containing film. In view of the ease of peeling (or strippability) of the cerium-containing films when the films sandwiching the MEA 30 therebetween are removed after diffusion of cerium ions, the material for addition of the cerium compound may contain fluororesin. For example, a material in which at least one substance selected from polyamide, polyester and thermoplastic fluororubber is mixed into fluororesin may be used as the material containing fluororesin. The fluororesin may be selected from, for example, tetrafluoroethylene-ethylene copolymer (ETFE), tetrafluoroethylene-hexafluoropropylene-vinylidenefluoride ternary copolymer (THV), tetrafluoroethylene-perfluoroalkylvinylether copolymer (PFA), tetrafluoroethylene-hexafluoropropylene copolymer (FEP), tetrafluoroethylene-hexafluoropropylene-perfluoroalkylvinylether ternary copolymer (EPA), and polyvinylidene fluoride (PVDF). The cerium-containing film is desirably formed from a film from which other substances than cerium, which would affect the proton conductivity of the electrolyte membrane 20, are not leached out (i.e., a film from which components of the cerium-containing film other than cerium do not diffuse). Thus, the polymers as indicated above may be used as a constituent material of the cerium-containing film for addition of the cerium compound.

It is preferable that the cerium-containing film is constructed of a polymer electrolyte, as in this embodiment, since cerium is ionized and dissolved in water, such as combined water, contained in the cerium-containing film itself, and the cerium ions are diffused from the cerium-containing film with increased efficiency. However, even in the case where the cerium-containing film is formed of other materials as indicated above, cerium in the cerium-containing film is ionized and dissolved into water contained in the electrolyte of the MEA 30, from a region of the film that contacts the MEA 30, so that the cerium ions are diffused into the MEA 30. When the cerium-containing film is brought into contact with the MEA 30 for diffusion of cerium ions into the electrolyte, the amount of cerium ions added to the electrolyte can be strictly controlled by suitably selecting the type of material used for adding the cerium compound to the cerium-containing film, and suitably setting the temperature and the time at/for which the cerium ions are diffused into the electrolyte.

While the MEA is produced in this embodiment by transferring the electrodes formed on suitable bases onto the electrolyte membrane, and then the cerium-containing films are brought into contact with the MEA, the cerium-containing films may be used as bases on which the electrodes and the electrolyte membrane are formed. For example, a catalyst paste may be applied by coating onto cerium-containing films so as to form electrodes, and the cerium-containing films may be superimposed on an electrolyte membrane, to bring the electrodes into contact with the electrolyte membrane, so that diffusion of cerium ions from the cerium-containing films into the electrolyte membrane and transfer of the electrodes onto the electrolyte membrane are accomplished at the same time. The electrolyte membrane may also be used as a base or substrate when the MEA is produced according to a known method, such as extrusion or casting. In these cases, too, similar effects as described above are obtained.

Evaluation of Cerium Diffusion into MEA 30: Example 1: A MEA of Example 1 was produced according to the embodiment as described above, and diffusion of cerium in the interior of the MEA was observed. The MEA of Example 1 was produced under the following conditions.

In step S100, a 50µm-thickness ion exchange membrane (trade name: Nafion112 manufactured by DuPont, the ion exchange capacity being equal to 0.89 mEq/g dry resin) formed of a perfluorocarbon polymer having a sulfonic acid group was prepared as the electrolyte membrane.

To form the electrodes on the bases in step S110, 1.0 g of platinum-loaded carbon particles on which platinum was loaded in the amount of 45wt% were prepared, and the carbon particles were mixed with 4g of distilled water and 5g of an electrolyte solution (trade name: Nafion Solution manufactured by Aldrich Chemical, the solution having a solid content of 10%, and an ion exchange capacity of 0.95 - 1.03 mEq/g dry resin). Thereafter, the mixture was ultrasonically dispersed, to produce a catalyst paste, and the catalyst paste thus obtained was applied by coating onto a base made of polytetrafluoroethylene (PTFE) with a bar coater, and was dried for 5 min. on a hot plate heated to 130°C, to form an electrode. The amount of platinum (per unit area) contained in the thus obtained electrode was 0.4 mg/cm².

In step S120, the electrodes formed on the bases were placed on the electrolyte membrane prepared in step S100, and were transferred onto the electrolyte membrane by hot press. The hot press was conducted at 130°C. In this manner, the electrodes were formed on the opposite surfaces of the electrolyte membrane, to provide the MEA. The area of the electrode was 13 cm².

In step S130, cerium nitrate (manufactured by Wako Pure Chemical Industries, Ltd., Ce(NO₃)₃·6H₂O) was dissolved, in a concentration of 5wt%, in an electrolyte solution similar to that used in step S110, to produce a cerium-containing solution. Then, the cerium-containing solution was applied by coating to a glass plate as a substrate with a bar coater, then left standing for 24 hours at room temperature, and then dried in an oven at 80°C for 120 min., to provide a cerium-containing film having a thickness of 0.5 mm.

In step S140, in order to diffuse cerium into the MEA, using the cerium-containing film obtained in step S130, the cerium-containing film was superimposed on one side of the MEA obtained in step S120, rather than sandwiching the MEA between the cerium-containing films. Then, the assembly of the cerium-containing film and the MEA, to which a pressure of 0.1 MPa was applied, was left standing for 24 hours in a desiccator (25°C, 50%RH). In this way, cerium ions were diffused into the electrolyte in which water was contained in an amount exceeding that of combined water.

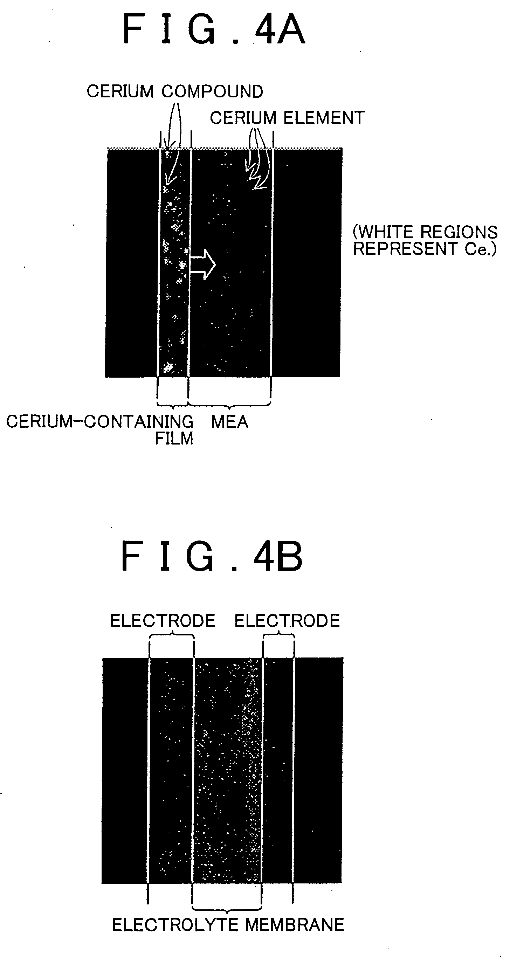

FIG. 4A shows a section of the MEA into which cerium ions were diffused in step S140, which section was observed with an X-ray microanalyzer (EPMA). In FIG. 4A, the arrow denotes the direction in which cerium ions diffuse from the cerium-containing film into the MEA. As shown in FIG. 4A, dispersion of cerium ions from the cerium-containing film into the MEA was observed. As is understood from FIG. 4A, the cerium compound added to the cerium-containing film exists in the form of flocculates of fine particles in the cerium-containing film, and the fine particles are uniformly dispersed in the MEA. The content of cerium in the MEA into which cerium was diffused was quantitatively evaluated with a high-frequency plasma emission mass spectrometer (ICP-MS), and the cerium content was found to be 17 µg/cm².

FIG. 4B shows a section of a MEA similar to that of Example 1 which was sandwiched between the cerium-containing films in step S140 for diffusion of cerium, which section was observed with the X-ray microanalyzer (EPMA). In this case, too, dispersion of cerium ions in the MEA was observed.

Example 2: Another sample of MEA was produced as a MEA of Example 2. In the production of the MEA of Example 2, the process of steps S100 - S120 was carried out in the same manner as in the production of the MEA of Example 1.

In step S130, cerium nitrate (manufactured by Wako Pure Chemical Industries, Ltd., Ce(NO₃)₃·6H₂O) was added, in a concentration of 5wt%, to polyvinylidene fluoride (PVDF, trade name: IKF polymer manufactured by Kureha Corporation), and these substances were dissolved in N-methyl-2-pyrrolidone (NMP), to produce a NMP solution having a solid content or solid-matter concentration of 10wt%. The thus obtained NMP solution was applied by coating to a glass plate as a substrate with a bar coater, and then dried in an oven at 130°C for 60 min., to provide a cerium-containing film having a thickness of 0.5 mm.

In step S140, the cerium-containing film obtained in step S130 was superimposed on one side of the MEA obtained in step S120, and the resulting structure, to which a pressure of 0.1 MPa was applied, was left standing for 30 days in the desiccator (25°C, 50°/RH).

When a section of the MEA into which cerium ions were diffused in step S140 was observed with the X-ray microanalyzer (EPMA), dispersion of cerium in the MEA was observed (no data shown), as in Example 1. The content of cerium diffused into the MEA, which was quantitatively evaluated with the high-frequency plasma emission mass spectrometer (ICP-MS), was 7µg/cm².

Example 3: A further sample of MEA was produced as a MEA of Example 3. In the production of the MEA of Example 3, the process of step S100 was carried out in the same manner as in the production of the MEA of Example 1. When a catalyst paste was applied by coating to a base in step S110 to form each electrode during production of the MEA of Example 3, a cerium-containing film was used as the base, and the electrode was formed on the cerium-containing film.

The cerium-containing film serving as the base on which the electrode was formed was produced by adding cerium oxide (CeO₂) to latex (trade name: DAI-EL Latex GLS-213 manufactured by Daikin Industries, Ltd.) composed of a mixture of fluororubber and fluororesin, such that the concentration of cerium oxide became 5wt%, and forming the resulting mixture into a film. The catalyst paste was applied by coating onto the thus produced cerium-containing film with the bar coater in the same manner as in step S110 of Example 1, and was dried for 5 min. on a hot plate at 130°C, to form an electrode. The amount of platinum per unit area contained in the obtained electrode was calculated, and was found to be 0.4 mg/cm². When a section of the electrode was observed with the X-ray microanalyzer (EPMA), dispersion of cerium in the electrode was observed (no data shown). The content of cerium in the electrode, which was quantitatively evaluated with the high-frequency plasma emission mass spectrometer (ICP-MS), was 3 µg/cm².

Next, the electrodes formed on the cerium-containing films as described above were superimposed on the electrolyte membrane prepared in step S100, and were transferred onto the electrolyte membrane by hot press. The hot press was conducted at 150°C. In this manner, the electrodes were formed on the opposite surfaces of the electrolyte membrane, to provide the MEA that is sandwiched between the cerium-containing films. The MEA thus sandwiched between the cerium-containing films was left sanding for 24 hours in the desiccator (25°C, 50%RH). When a section of the MEA into which cerium was diffused was observed with the X-ray microanalyzer (EPMA), dispersion of cerium in the MEA was observed (no data shown).

It is to be understood that this invention is not limited to the above-described embodiment and examples, but may be embodied in various forms, without departing from the principle of the invention. For example, the illustrated embodiment may be modified in the following manners.

Modified Example 1: In the illustrated embodiment, when the electrodes are formed on the electrolyte membrane, the electrodes formed on the bases different from the electrolyte membrane are transferred onto the electrolyte membrane. However, the electrodes may be formed in different manners. For example, the catalyst paste may be directly applied by coating onto the electrolyte membrane, to form the electrodes. In this method, too, the cerium-containing films are superimposed on the electrolyte membrane before the electrodes are formed on the electrolyte membrane, or after the electrodes are formed on the electrolyte membrane, so as to provide a fuel cell having the electrolyte membrane in which cerium is dispersed. Even in the case where the catalyst paste is directly applied by coating onto the electrolyte membrane, a similar effect of suppressing or avoiding deformation of the electrolyte membrane can be obtained, as compared with the case where, for example, the electrolyte membrane is immersed in a cerium-containing solution.

Where the electrodes are formed on the electrolyte membrane after cerium ions are diffused from the cerium-containing film(s) into the electrolyte membrane, the electrodes may be formed on the gas diffusion layers before they are formed on the electrolyte membrane. In this case, the catalyst paste is applied by coating onto surfaces of electrically conductive porous bodies used as the gas diffusion layers, to produce the electrodes, and the electrodes formed on the gas diffusion layers are joined to the electrolyte membrane in which cerium has been dispersed.

Modified Example 2: 1 While a fluorine-containing solid polymer electrolyte is used as the electrolyte provided in the electrolyte membrane and the electrodes in the illustrated embodiment, different arrangements may be employed. For example, a hydrocarbon-containing solid polymer electrode may be used in place of the fluorine-containing solid polymer electrolyte. Also, the type of the electrolyte used in the electrolyte membrane may differ from that used in the electrodes. In these cases, too, the cerium-containing films are used for dispersing cerium in the electrolyte, so as to provide a similar effect of suppressing degradation of the electrolyte due to peroxide radicals while preventing deformation of the electrolyte membrane.

## Claims

1. A method of producing an electrolyte membrane-electrode assembly that constitutes a fuel cell, **characterized by** comprising:
preparing a polymer electrolyte membrane comprising a solid polymer electrolyte;
forming an electrode including a catalyst, on the polymer electrolyte membrane;
preparing a cerium-containing film containing a cerium compound; and
superimposing the cerium-containing film on the polymer electrolyte membrane on which the electrode is formed, such that the electrode and the cerium-containing film are in contact with each other.

2. A method of producing an electrolyte membrane-electrode assembly that constitutes a fuel cell, **characterized by** comprising:
preparing a polymer electrolyte membrane comprising a solid polymer electrolyte;
preparing a cerium-containing film containing a cerium compound;
forming an electrode including a catalyst, on the cerium-containing film; and
superimposing the cerium-containing film on which the electrode is formed, on the polymer electrolyte membrane, such that the electrode and the polymer electrolyte membrane are in contact with each other.

3. The method of producing an electrolyte membrane-electrode assembly according to claim 1 or 2, wherein the cerium-containing film includes a film comprising a solid polymer electrolyte, and the cerium compound dispersed in the film.

4. The method of producing an electrolyte membrane-electrode assembly according to any one of claims 1 to 3, wherein the cerium compound contained in the cerium-containing film includes at least cerium oxide (CeO₂).

5. The method of producing an electrolyte membrane-electrode assembly according to any one of claims 1 to 4, wherein the electrode contains a polymer electrolyte in addition to the catalyst.

6. The method of producing an electrolyte membrane-electrode assembly according to claim 1, wherein the polymer electrolyte membrane on which the electrodes are formed is sandwiched between the cerium-containing films, and the cerium-containing films are superimposed on the polymer electrolyte membrane on which the electrodes are formed, such that the electrodes and the cerium-containing films are in contact with each other.

7. The method of producing an electrolyte membrane-electrode assembly according to claim 2, wherein the polymer electrolyte membrane on which the electrodes are formed is sandwiched between the cerium-containing films, and the cerium-containing films are superimposed on the polymer electrolyte membrane on which the electrodes are formed, such that the electrodes and the cerium-containing films are in contact with each other.

8. A method of producing an electrolyte membrane that constitutes a fuel cell, **characterized by** comprising:
preparing a polymer electrolyte membrane comprising a solid polymer electrolyte;
preparing a cerium-containing film containing a cerium compound; and
bringing the polymer electrolyte membrane and the cerium-containing film into contact with each other.

9. The method of producing an electrolyte membrane according to claim 8, wherein the cerium-containing film includes a film comprising a solid polymer electrolyte, and the cerium compound dispersed in the film.

10. The method of producing an electrolyte membrane according to claim 8 or 9, wherein the cerium compound contained in the cerium-containing film includes at least cerium oxide (CeO₂).

11. The method of producing an electrolyte membrane according to any one of claims 8 to 10, wherein the polymer electrolyte membrane is sandwiched between the cerium-containing films, so that the polymer electrolyte membrane and the cerium-containing films are brought into contact with each other.

12. A method of producing an electrolyte membrane-electrode assembly that constitutes a fuel cell**characterized by** comprising:
preparing the electrolyte membrane produced according to the method of claim 8; and
forming an electrode including a catalyst, on the electrolyte membrane.

13. The method of producing an electrolyte membrane-electrode assembly according to claim 1 or 2, wherein the cerium-containing film includes a film formed of a material containing fluororesin, and the cerium compound dispersed in the film.

14. The method of producing an electrolyte membrane-electrode assembly according to claim 13, wherein the fluororesin comprises at least one resin selected from the group consisting of tetrafluoroethylene-ethylene copolymer, tetrafluoroethylene-hexafluoropropylene-vinylidenefluoride ternary copolymer, tetrafluoroethylene-perfluoroalkylvinylether copolymer, tetrafluoroethylene-hexafluoropropylene copolymer, tetrafluoroethylene-hexafluoropropylene-perfluoroalkylvinylether ternary copolymer, and polyvinylidene fluoride.

15. The method of producing an electrolyte membrane-electrode assembly) according to claim 1 or 2, wherein the solid polymer electrolyte is a perfluorosulfonic acid electrolyte.
